# EUROPÄISCHE PATENTSCHRIFT

(11) **EP 0 507 289 B1**
(45) Veröffentlichungstag und Bekanntmachung des Hinweises auf die Patenterteilung: **01.03.1995**
(21) Anmeldenummer: 92105647.9
(22) Anmeldetag: 02.04.1992
(51) Int. Cl.: F16B 12/20

(54) **Möbelverbindungsbeschlag**
Connection fitting for furniture
Ferrure de connexion pour meubles

(30) Priorität: 04.04.1991 DE 4110809; 29.06.1991 DE 4121605
(43) Veröffentlichungstag der Anmeldung: 07.10.1992
(73) Patentinhaber: Adolf Würth GmbH & Co. KG, D-74653 Künzelsau (DE)
(72) Erfinder: Humm, Siegfried, W-7109 Schöntal-Westernhausen (DE)
(74) Vertreter: Patentanwälte Ruff, Beier, Schöndorf und Mütschele

(56) Entgegenhaltungen:
- US-A- 3 730 568

## Beschreibung

Die Erfindung betrifft einen Beschlag zum Verbinden von zwei aufeinanderstoßenden Möbelteilen. Dabei soll das eine Möbelteil mit seiner Stirnkante mit der Oberfläche des anderen Möbelteils verbunden werden. Aus der Oberfläche ragt, normalerweise unter einem rechten Winkel, ein Spannbolzen mit einem gegenüber seinem Schaft verbreiterten Kopf heraus. In dem anderen Möbelteil ist im Bereich von dessen Stirnkante ein Beschlagteil angeordnet, wobei das Möbelteil mit seiner Stirnkante so auf den Spannbolzen aufgeschoben wird, daß dieser durch eine Durchbrechung in der Stirnkante des Möbelteils und eine Öffnung in dem Beschlagteil in dieses Beschlagteil eindringt. Dort wird er mit Hilfe von Exzenterwirkung festgespannt. Der Beschlag liegt also sehr nahe an der Stirnkante und damit in Zusammengesetztem Zustand an der Oberfläche des anderen Möbelteils.

Es ist bereits ein Verbindungsbeschlag nach dem ersten Teil des Anspruchs 1 bekannt (US-A-3730568). Bei diesem bekannten Beschlag ist das Spannelement um eine feste Achse verdrehbar angeordnet. Die Einzugsstrecke bzw. die Kraft, mit der an dem Spannbolzen angezogen wird, bestimmt sich dadurch ausschließlich durch die Steigung der an der Unterseite des Kopfes des Spannbolzens angreifenden Fläche. In verriegeltem Zustand liegt der Spannhebel mit gewissem Abstand oberhalb der Möbelfläche.

Weiterhin ist ein Beschlag bekannt (DE-C-30 09 380), wobei zur Erleichterung des Betätigens des Beschlages mit Hilfe eines Schraubenziehers vorgesehen ist, daß die Drehachse schräg verläuft, so daß der Benutzer mit seinem Schraubenzieher leichter Zugang zu dem in der Ecke angeordneten Beschlag hat. Bei diesem bekannten Beschlag greift jedoch die Spannfläche einseitig an der Unterseite des Kopfes des Spannbolzens an, so daß dieser auch einseitig belastet wird.

Ebenfalls bekannt sind Beschläge, bei denen die Drehachse senkrecht zu der Oberfläche des Möbelteils verläuft, in dem das Topfelement angeordnet ist. Dann muß der Schraubenzieher aber mit dichtem Abstand vor der Oberfläche des anderen Möbelteils gehalten und verdreht werden, was ziemlich schwierig ist.

Weiterhin bekannt ist ein Verbindungsbeschlag (DE-A-33 15 254), bei dem in beiden Möbelteilen ein Topfgehäuse angeordnet wird. Das eine Topfgehäuse weist eine über die Stirnkante des Möbelstücks vorspringende Führungsnase auf, die eine rechteckige durchgehende Ausnehmung besitzt. Das zweite Beschlagteil enthält einen Exzenter, der unter Federwirkung in die Ausnehmung eingeschwenkt wird und die Führungsnase festlegt. Ausschließlich zum Öffnen des Beschlags ist ein Hebel vorgesehen, der an dem Exzenter angreift und diesen zurück verschwenken kann.

Der Erfindung liegt die Aufgabe zugrunde, einen Möbelverbindungsbeschlag zu schaffen, der bei konstruktiv einfachem Aufbau sich einfacher und leichter bedienen läßt.

Zur Lösung dieser Aufgabe schlägt die Erfindung einen Beschlag mit den Merkmalen des Anspruchs 1 vor. Weiterbildungen sind Gegenstand der Unteransprüche.

Bei dem Beschlag nach der Erfindung ragt ein Ansatz an dem Spannelement mindestens in der Freigabestellung heraus, so daß ein Benutzer an diesem Werkzeug angreifen und das Spannelement bis in Spannstellung verschwenken kann. Da das Lösen eines derartigen Verbindungsbeschlages selten vorkommt, ist das Überführen des Beschlages in Sperrstellung beim Aufbau des Möbelstückes der normale Vorgang, so daß es erfindungsgemäß ausreichen kann, wenn der Ansatz nur zum Verriegeln von Hand bedient werden kann. Selbstverständlich ist es auch möglich, den herausragenden Ansatz mit einem Werkzeug zu betätigen, falls dies im Einzelfall gewünscht ist.

Die Erfindung sieht in Weiterbildung vor, daß der Ansatz in Sperrstellung im wesentlichen in der Ebene der Oberfläche eines der beiden Möbelteile liegt. Dabei kann er beispielsweise auf der Oberfläche direkt aufliegen, so daß der Ansatz, der als in dieser Richtung flaches Bauteil ausgebildet sein kann, praktisch nicht stört. Es ist auch denkbar, daß in die Oberfläche des Möbelteils eine Vertiefung eingebracht wird, in der der Ansatz im Sperrzustand untergebracht ist, so daß er gar nicht über die Oberfläche vorsteht.

In Weiterbildung kann vorgesehen sein, daß der Ansatz in Freigabestellung mit der Oberfläche beider Möbelteile einen spitzen Winkel einschließt. Dann läßt sich das Sperrelement durch Angreifen an dem Ansatz einfach verschwenken, indem der Ansatz in Richtung auf die Oberfläche gedrückt wird, bis er an dieser anliegt. Auf den ersten Blick kann ein Benutzer überprüfen, ob der Verbindungsbeschlag in seiner Sperrstellung oder seiner Freigabestellung ist.

Insbesondere kann vorgesehen sein, daß der Ansatz in Sperrstellung auf der Oberfläche des Möbelteils aufliegt, in dem das Topfgehäuse eingesetzt ist.

Die Erfindung schlägt in Weiterbildung vor, daß die Drehachse des Spannelements senkrecht zur Längsachse des Spannbolzens verlaufen kann. Dies ist die für die Herstellung einer Verbindung, die ja durch Zug an dem Spannbolzen erreicht wird, günstigste Richtung. Von ihr wurde beim Stand der Technik zur Erleichterung der Bedienung abgewichen. Die Erfindung kombiniert durch ihre Merkmale sowohl die günstigste Lage der Drehachse des Spannelements als auch die leichte Bedienbarkeit.

In Weiterbildung kann vorgesehen sein, daß die Drehachse des Spannelements auch parallel zur Oberfläche beider Möbelteile verlaufen kann. Dies ist im Stand der Technik nicht möglich, da dann kein Ansatzpunkt für den Schraubendreher mehr gegeben sein würde.

Die Erfindung schlägt in Weiterbildung vor, daß das Topfgehäuse einen auf der Oberfläche des Möbelteils aufliegenden Flansch aufweisen kann. Dieser Flansch kann insbesondere zur Gewährleistung der korrekten Lage des Topfgehäuses dienen. Das Topfgehäuse, das üblicherweise an seiner Außenseite eine Verrippung mit Sägezahnquerschnitt aufweist, wird in eine Bohrung eingedrückt, so daß der Flansch die korrekte Eindrücktiefe gewährleistet. Erfindungsgemäß kann vorgesehen sein, daS an dem Flansch parallel zum Topfgehäuse ein Zapfen angebracht ist, der in eine zweite Bohrung eingreift, so daß auch die winkelmäßig richtige Ausrichtung des Beschlags gewährleistet ist.

Erfindungsgemäß kann vorgesehen sein, daß der Flansch eine Durchbrechung aufweist, die in ihrer Größe und Anordnung dem flachen Ansatz an dem Spannelement entspricht. Dann liegt in geschlossenem Zustand der Ansatz des Spannelements in dieser Durchbrechung. Er ist auf diese Weise so untergebracht, daß auch kein versehentliches Eindringen von dünnen Gegenständen, beispielsweise Papierbögen, hinter dem Ansatz möglich ist.

Erfindungsgemäß kann vorgesehen sein, daß das Spannelement so ausgebildet ist, daß die Spannfläche an der Unterseite des Kopfes des Spannbolzens beidseits des Schaftes angreift. Sowohl der Kopf als auch der Schaft des Spannbolzens werden daher gleichmäßig in Längsrichtung beansprucht.

Die Erfindung schlägt vor, die Spannfläche des Spannelements so zu gestalten, daß sich an einen Spannbereich, in dem sich der Abstand der Spannfläche von der Drehachse verringert, ein Festlegbereich anschließt, in dem sich dieser Abstand nicht mehr verringert, sondern gleich bleibt. Auf diese Weise lassen sich Ungenauigkeiten beim Einschrauben des Spannbolzens ausgleichen. Es ist auf jeden Fall dafür gesorgt, daß nach dem Festspannen noch ein Bereich vorhanden ist, in dem ein weiteres Spannen nicht mehr auftritt, so daS der Ansatz an dem Spannelement sich noch bis in die gewünschte Endstellung bewegen läßt.

Erfindungsgemäß kann vorgesehen sein, daß vor dem Spannbereich ein Einzugbereich angeordnet ist, in dem sich der Abstand der Spannfläche von der Drehachse pro Längeneinheit stärker verringert. Es reicht daher aus, das Möbelteil auf den Spannbolzen einfach aufzuschieben, während das letzte Andrücken der beiden aneinander zu befestigenden Möbelteile durch diesen Einzugbereich beim Spannen des Ansatzes erfolgt.

Der Ansatz kann erfindungsgemäß als Spannhebel ausgebildet sein.
Durch die exzentrische Lagerung des Spannelements kann eine verbesserte Spannwirkung erreicht werden. Dies gilt insbesondere dann, wenn die Exzentrizität der Lagerung des Spannelements und die Exzentrizität der Spannfläche derart aufeinander abgestimmt sind, daß sie sich addieren. Dadurch wird es möglich, die Axialbewegung der Spannfläche so zu gestalten, daß trotz der Verschwenkung des Spannelements um einen spitzen Winkel die auf den Spannbolzen ausgeübte Kraft in allen Fällen zu einer festen Verriegelung ausreicht.

In Weiterbildung schlägt die Erfindung vor, daß das Spannelement in Sperrstellung verrastbar festlegbar ist. Da der Benutzer den Verbindungsbeschlag von Hand schließen kann, ist es für ihn besonders wichtig, wenn er das Verrasten des Beschlags spüren kann.

Insbesondere kann vorgesehen sein, daß die Verrastung zwischen dem Ansatz des Spannelements und dem Topfgehäuse vorgesehen ist, also an der Stelle, an der der Benutzer mit der Hand angreift.

Die Erfindung schlägt in Weiterbildung vor, daß der Beschlag einen Anschlag aufweisen kann, der die Freigabestellung des Spannelements begrenzt. Dies erleichtert die Handhabung insbesondere in den Fällen, wo das Gewicht des Ansatzes zu einer Verschwenkung des Spannelements in Freigabestellung führt. Insbesondere gilt dies natürlich bei einer Montage über Kopf.

Erfindungsgemäß kann vorgesehen sein, daß der Ansatz des Spannhebels eine Eingriffsmöglichkeit zum Einsetzen eines Werkzeugs aufweist, damit der Verbindungsbeschlag aus der Verriegelungsstellung wieder gelöst werden kann. Dabei ist es von besonderem Vorteil, wenn die Einsetzmöglichkeit so gestaltet wird, daß ein Öffnen des Beschlages nur mit dem Werkzeug möglich ist.

In Weiterbildung der Erfindung kann vorgesehen sein, daß zur Lagerung des Spannelements dieses mindestens eine, vorzugsweise zwei Wellen aufweist, von denen jede Welle abgestuft ist. Ein äußerer Teil ist kreiszylindrisch ausgebildet, während ein sich daran anschließender innerer Teil mindestens einen Exzenternocken aufweist. Dieser Exzenternocken kann sich insbesondere an einer Schulter des Topfgehäuses abstützen, um beim Schließen die Exzenterwirkung hervorzurufen.

In Weiterbildung kann vorgesehen sein, daß ein zweiter Exzenternocken an dem inneren Teil der abgestuften Welle angeordnet ist, der sich an einer zweiten Schulter des Topfgehäuses abstützt. Dieser zweite Exzenternocken dient dazu, die Spannfläche bei Öffnungsstellung näher an die Stirnfläche des Beschlags heranzubringen, damit das Einsetzen des Spannbolzens erleichtert wird.

Der äußere Teil der abgestuften Welle kann mit Vorteil in einem Langloch im Topfgehäuse gelagert sein, wobei dieses Langloch insbesondere die korrekte Ausrichtung des Spannelements gegenüber der Oberfläche des Möbelteils gewährleistet.

Weitere Merkmale, Einzelheiten und Vorteile der Erfindung ergeben sich aus den Ansprüchen, der folgenden Beschreibung bevorzugter Ausführungsformen der Erfindung sowie anhand der Zeichnung. Hierbei zeigen:
- Fig. 1: eine Seitenansicht einer Hälfte des zweiteiligen Topfgehäuses;
- Fig. 2: eine Aufsicht auf die Anordnung der Fig. 1;
- Fig. 3: einen Längsschnitt durch ein in dem Topfgehäuse der Fig. 1 und 2 zu lagerndes Spannelement;
- Fig. 4: eine Aufsicht auf das Spannelement der Fig. 3;
- Fig. 5: schematisch die Anordnung zweier zu verbindender Möbelteile unmittelbar zu Beginn des Festlegvorgangs;
- Fig. 6: schematisch eine teilweise geschnittene Ansicht des Angreifens des Sperrelements an einem Spannbolzen.
- Fig. 7: eine Seitenansicht einer Hälfte eines zweiteiligen Topfgehäuses;
- Fig. 8: eine Aufsicht auf die Anordnung der Fig. 7;
- Fig. 9: eine Seitenansicht durch ein Spannelement;
- Fig. 10: eine Aufsicht auf das Spannelement der Fig. 9;
- Fig. 11: eine Stirnansicht auf das Spannelement der Fig. 9 und 10.

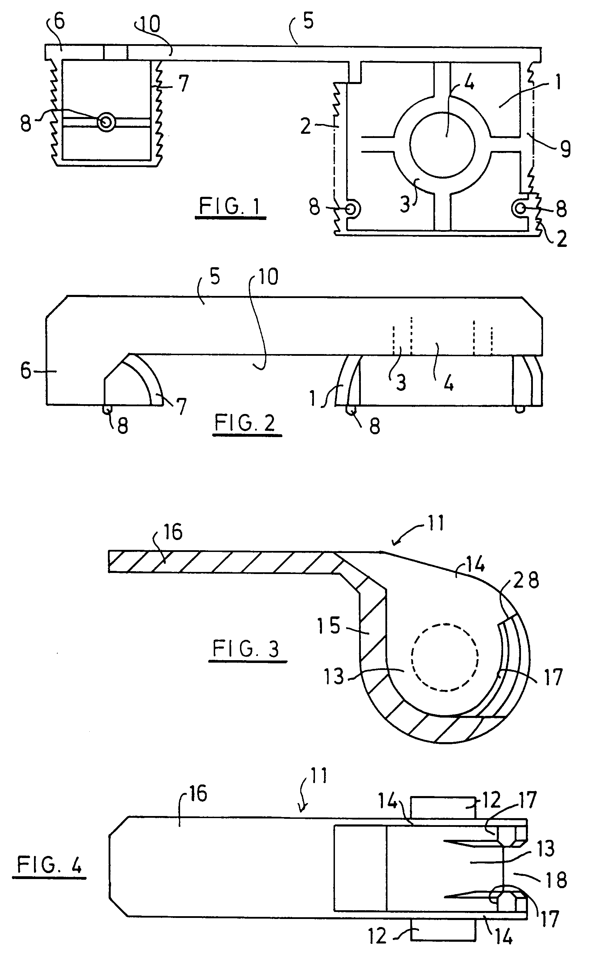

Das zu dem Beschlag nach der Erfindung gehörende Topfgehäuse ist aus zwei längs einer Mittelebene im wesentlichen symmetrisch ausgebildeten Teilen aufgebaut, von denen die Fig. 1 ein derartiges Teil zeigt. Es enthält ein Topfgehäuse 1, das an seiner Außenseite eine umlaufende Verrippung 2 aufweist. Die Verrippung ist sägezahnförmig ausgebildet und so orientiert, daß die flache Flanke in Richtung auf den Boden des Lochs orientiert ist, so daß das Einschieben in eine Bohrung erleichtert, das Herausziehen aber erschwert wird. An der Innenseite des Topfgehäuses ist mit Helfe einer zylindrischen Wand 3 eine zylindrische Lageröffnung 4 gebildet, die quer zur Längsachse des Topfgehäuses verläuft.

An der in Fig. 1 oberen, d.h. der äußeren Seite des Topfgehäuses 1 ist ein Flansch 5 angeordnet, der allseits etwas über das Topfgehäuse 1 vorsteht und auf einer Seite des Topfgehäuses 1 langgestreckt ausgebildet ist. An diesem dem Topfgehäuse 1 abgewandten Ende 6 des Flansches 5 ist an der Unterseite des Flansches 5, d.h. also auf der gleichen Seite wie das Topfgehäuse 1, ein ebenfalls topfähnlicher Zapfen 7 angeordnet.

Die in Fig. 1 dargestellte Hälfte des Beschlagteils enthält sowohl im Zapfen 7 als auch im eigentlichen Topfgehäuse 1 einzelne, über die Mittelebene vorspringende Verbindungszapfen 8. Das spiegelbildlich ausgebildete zweite Teil enthält an der gleichen Stelle Öffnungen, so daß die beiden Teile durch Eingreifen der Zapfen 8 in die entsprechenden Öffnungen zusammengesetzt und verbunden werden können.

Auf der dem Zapfen 7 abgewandten Seite des Topfgehäuses 1 enthält dieses einen Schlitz 9, so daß das Topfgehäuse 1 auf dieser Seite offen ist.

Fig. 2 zeigt die Aufsicht auf das Beschlagteil der Fig. 1. Es ist zu sehen, daß der Flansch 5 die Außenform einer langgestreckten rechteckigen Platte, beispielsweise mit abgeschrägten Ecken, aufweist. Der Flansch 5 ist etwa L-förmig ausgebildet, so daß in zusammengesetztem Zustand des Beschlagteils in der Mitte eine Durchbrechung 10 gebildet ist.

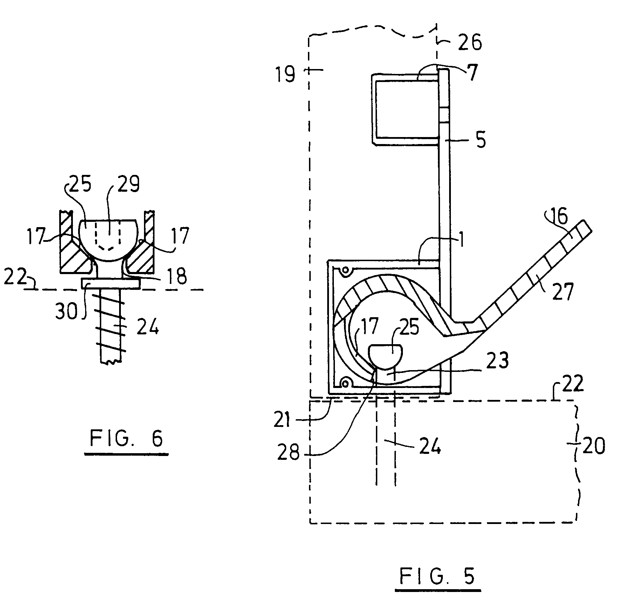

In das Topfgehäuse 1 eingesetzt wird ein Spannelement 11, das in Fig. 3 und 4 dargestellt ist. Das Spannelement 11 enthält an seiner Außenseite je einen Lagerzapfen 12, siehe Fig. 4, dessen Außendurchmesser etwa dem Innendurchmesser der Lageröffnung 4 des Topfgehäuses 1 entspricht. Das Spannelement kann also in dem Topfgehäuse verschwenkt werden. Es enthält einen zentralen Innenraum 13, der beidseits durch eine scheibenartige Stirnwand 14 abgeschlossen wird. An der Außenseite der Stirnwände 14 sind die Lagerzapfen 12 ausgebildet. Der Innenraum 13 ist auf der in Fig. 3 und 4 linken Seite durch eine Außenwand 15 abgeschlossen, die zur Außenseite hin in einen hebelartigen Ansatz 16 übergeht. Der Ansatz 16 ist flach und eben ausgebildet, und seine Außenform und -abmessung entspricht der Innenform und -abmessung der Durchbrechung 10 in dem Flansch 5 der beiden Beschlagteile. Die Außenwand 15 geht in dem in Fig. 3 rechten Endbereich des Spannelements 11 in eine Spannfläche 17 über, die mindestens teilweise exzentrisch gegenüber der Drehachse der Lageransätze 12 verläuft. Die Spannfläche 17 ist durch einen mittleren Schlitz 18 in zwei symmetrisch ausgebildete Teile aufgeteilt. Durch diesen Schlitz 18, der insbesondere aus Fig. 4 hervorgeht, kann der Schaft eines Spannbolzens hindurchgreifen.

Der Beschlag nach der Erfindung wird aus zwei spiegelbildlichen Beschlagteilen, wie sie in Fig. 1 und 2 dargestellt sind, und einem Spanelement 11 zusammengesetzt. In zusammengesetztem Zustand läßt sich das Spannelement 11 durch Angreifen an dem Ansatz 16 in Art eines Hebels verschwenken. Die Stellung, in der der Ansatz 16 in der Durchbrechung 10 des Flansches 5 liegt, ist die Sperr- bzw. Verriegelungsstellung des Beschlags. Aus dieser Stellung läßt sich der Ansatz 16 im Uhrzeigersinn bis in eine Freigabestellung verschwenken, in der der Ansatz 16 mit der Oberseite des Flansches 5 einen Winkel einschließt. Diese Situation ist in Fig. 5 schematisch dargestellt.

In Fig. 5 sind zwei Möbelteile 19, 20 gestrichelt in einer Position dargestellt, in der sie mit Hilfe des Beschlages nach der Erfindung miteinander verbunden werden sollen. Das Möbelteil 19 soll mit seiner Stirnkante 21 mit der Oberfläche 22 des Möbelteils 20 verbunden werden. Beide Möbelteile sind beispielsweise furnierte Spanplatten. Aus der Oberfläche 22 des zweiten Möbelteils 20 ragt der Schaft 23 eines Spannbolzens 24 heraus. Der Spannbolzen 24 hat im Bereich seines freien Endes einen Kopf 25 mit gegenüber dem Schaft 23 vergrößertem Durchmesser. Besonders günstig ist es, wenn der Spannkopf im Bereich seiner Unterseite kugelförmig ausgebildet ist.

In das Möbelteil 19 wurden von seiner Oberfläche 26 her zwei Sacklochbohrungen eingebracht, von denen die eine fast im Bereich der Stirnkante 21 liegt. Diese Sacklochbohrung kann auch so eingebracht werden, daß ihr Rand die Stirnkante 21 schneidet, so daß an dieser Stelle ein Durchgang zu der Sacklochbohrung vorhanden ist. Parallel zu dieser Sacklochbohrung ist die zweite Sacklochbohrung zur Aufnahme des Zapfens 7 eingebohrt worden. In die beiden Sacklochbohrungen wird der Beschlag nach der Erfindung eingepreßt, bis der Flansch 5 bündig auf der Oberseite 26 des Möbelteils 19 aufliegt.

Dann wird das Möbelteil 19 der Oberfläche 22 des Möbelteils 20 genähert und auf diese Oberfläche aufgesetzt, wobei der Kopf 25 des Spannbolzens 24 durch die erwähnte Öffnung in der Stirnkante 21 und den Schlitz 29 in das Innere des Topfgehäuses 1 eintritt. Das als Spannhebel 27 ausgebildete Spannelement 16 befindet sich in der in Fig. 5 dargestellten Freigabestellung, in der das äußere Ende 28 der Spannfläche 17 so weit verschwenkt ist, daß es das Eindringen des Kopfes 25 des Spannbolzens 24 in den Innenraum 13 des Spannelementes 16 ermöglicht. Das Möbelteil 19 wird aufgeschoben, bis seine Stirnkante 21 an der Oberfläche 22 anliegt. Anschließend greift der Benutzer an dem Ansatz 16 an und verschwenkt diesen in Richtung auf den Flansch 5, d.h. in Richtung auf die Oberfläche 26 desjenigen Möbelteils 19, in dem der Beschlag angebracht ist. Dabei gleitet die gegabelte Spannfläche 17 beidseits des Schaftes 23 des Spannbolzens 24 unter die Unterseite des Kopfes 25. Bei Weiterdrehen übt die Spannfläche 17 aufgrund des abnehmenden Abstands zur Drehachse eine Zugkraft auf die Unterseite des Spannkopfes 25 aus, so daß die Verbindung der beiden Möbelteile 19, 20 festgespannt und gesichert wird. Die Schwenkbewegung erfolgt, bis der Ansatz 16 an der Oberseite 26 des Möbelteils 19 anliegt.

Fig. 6 zeigt, wie die durch den Schlitz 18 geteilte Spannfläche 17 nach Art einer zweizinkigen Gabel an beiden Seiten der Unterseite des Kopfs 25 des Spannbolzens 24 angreift, so daß die ausgeübte Zugkraft gleichmäßig in Längsrichtung auf den Spannbolzen 24 einwirkt. Der Kopf 25 des Spannbolzens kann eine Vertiefung 29 zur Aufnahme eines Schraubendrehers oder eines anderen Werkzeugs aufweisen.

Damit der Spannbolzen bzw. sein Kopf 25 immer korrekt positioniert ist, enthält der Spannbolzen 24 einen umlaufenden Kragen 30, dessen Durchmesser deutlich größer als der Durchmesser des Schafts ist. Beim Eindrehen des Spannbolzens 24 mit Hilfe von dessen Gewinde ist die korrekte Position dann erreicht, wenn der Kragen auf der Oberfläche 22 aufliegt. Dies wird aufgrund der großen Fläche des Kragens 30 durch ein plötzliches Ansteigen des Drehmoments beim Eindrehen festgestellt.

Bei der dargestellten Ausführungsform ist die Spannfläche 17 so orientiert, daS zur Durchführung der Verbindung zwischen den beiden Möbelteilen ein Verschwenken des Spannhebels 27 in Richtung auf dasjenige Möbelteil 19 erfolgen muß, in dem der Beschlag untergebracht ist. Es ist auch möglich, die Ausbildung umgekehrt zu gestalten, so daß zum Durchführen der Spannung der Spannhebel 16 in umgekehrter Richtung beaufschlagt wird. In diesem Fall wäre die Sperrstellung des Beschlags dann gegeben, wenn der Ansatz 16 auf der Oberfläche 22 des anderen Möbelteils 20 aufliegt.

In der dargestellten Ausführungsform liegt der flache Ansatz 16 im Sperrzustand in der Durchbrechung 10 des Flansches 5. Hieraus läßt sich er sich nur mit Hilfe eines Werkzeugs, beispielsweise eines Schraubenziehers, lösen, mit dem der Ansatz aus der Durchbrechung 10 herausgehebelt wird. Es wäre auch möglich, auch das Öffnen des Verbindungsbeschlages ohne Werkzeug zu ermöglichen, indem der Ansatz 16 bzgl. der Durchbrechung 10 anders dimensioniert wird.

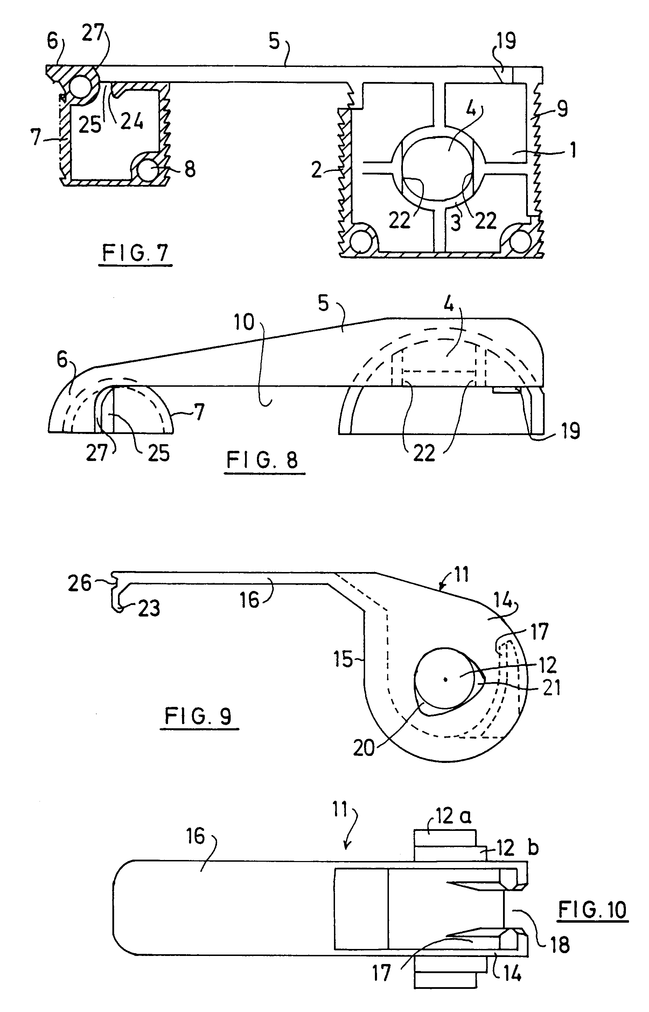

Die in Fig. 7 dargestellte Hälfte des Beschlagteils enthält sowohl im Zapfen 7 als auch im eigentlichen Topfgehäuse 1 Öffnungen 28, während die zugehörige, spiegelbildlich ausgebildete Hälfte an der gleichen Stelle Verbindungszapfen aufweist, die in die Löcher 28 eingreifen können. Dadurch lassen sich beide Teile des Beschlags zusammensetzen.

Fig. 8 zeigt die Aufsicht auf das in Fig. 7 dargestellte Beschlagteil. Es ist zu sehen, daß der Flansch 5 langgestreckte Form aufweist, wobei er sich an seinem dem Zapfen 7 zugeordneten Ende 6 in seiner Breite verjüngt. Der Flansch 5 ist etwa L-förmig ausgebildet, so daß in zusammengesetztem Zustand des Beschlagteils in der Mitte eine Durchbrechung 10 gebildet ist.

In das Topfgehäuse 1 eingesetzt wird ein Spannelement 11, das in Fig. 9 bis 10 dargestellt ist. Das Spannelement 11 enthält an seiner Außenseite je einen Lagerzapfen 12, mit dessen Hilfe das Spannelement 11 in der Lageröffnung 4 gelagert werden kann. Das Spannelement kann also in dem Topfgehäuse verschwenkt werden. Es enthält einen zentralen Innenraum 13, der beidseits durch eine scheibenförmige Stirnwand 14 abgeschlossen ist. An der Außenseite der Stirnwände 14 sind die Lagerzapfen 12 ausgebildet. Der Innenraum 13 ist auf der in Fig. 9 und 10 linken Seite durch eine Außenwand 15 abgeschlossen, die zur Außenseite hin in einen hebelartigen Ansatz 16 übergeht. Der Ansatz 16 ist flach und eben ausgebildet, und seine Außenform und Außenabmessung entspricht der Innenform und Innenabmessung der Durchbrechung 10 in dem Flansch 5 der beiden Beschlagteile. Die Außenwand 15 geht in dem in Fig. 9 und 10rechten Endbereich des Spannelements 11 in eine Spannfläche 17 über, die mindestens teilweise exzentrisch gegenüber dem Mittelpunkt des äußeren Teils 12a des Lageransatzes 12 verläuft. Die Spannfläche 17 ist durch einen mittleren Schlitz 18, siehe Fig.10, in zwei symmetrisch ausgebildete Teile aufgeteilt. Durch diesen Schlitz 18 kann der Schaft eines Spannbolzens hindurchgreifen, so daß die Spannfläche 17 an der Unterseite des Kopfes des Spannbolzens angreifen kann.

In der Freigabestellung schließt der Ansatz 16 mit der Oberseite des Flansches 5 einen Winkel ein, der etwas kleiner als ein rechter Winkel ist. Diese Freigabestellung wird durch Anliegen des Ansatzes 16 an einem Anschlag 19 begrenzt bzw. definiert, der an einer Längskante des Flansches 5 angeordnet ist und in die Durchbrechung 10 hineinragt. Dieser Anschlag 19 verhindert, daß das Spannelement 11 soweit aufklappt, daß es bei zusammengesetzten Möbelteilen an der Fläche des anderen Möbelteils anliegt.

Die Lagerzapfen 12 sind zweiteilig ausgebildet und enthalten einen nach außen gerichteten äußeren Teil 12a, der eine kreiszylindrische Form aufweist. Der zwischen dem äußeren Teil 12a und der Stirnwand 14 vorhandene Teil 12b weist, siehe Fig. 9 , zwei Exzenternocken 20, 21 auf.

Die Lageröffnung 4, die in Fig. 7 und 8 zu sehen ist, dient zur Aufnahme der zylindrischen Teile 12a der Lagerzapfen 12. Aufgrund der ovalen Langlochform wird daher das Spannelement 11 derart festgelegt, daß die Lagerzapfen 12 sich in ihrem Abstand zu dem Boden des Topfgehäuses 1 und zum Flansch 5 nicht verändern können. Dagegen können sie sich in einer dazu senkrecht stehenden Richtung bewegen.

An beiden in Längsrichtung gesehenen Enden der Lageröffnung 4 ist je eine nach innen gerichtete Schulter 22 gebildet. Die beiden Schultern sind aufeinander zu gerichtet. Sie stehen von dem Rand des Topfgehäuses etwas nach innen, d.h. in Richtung auf die Durchbrechung 10, vor. An den Schultern 22 liegt der zwischen dem zylindrischen Teil 12a und den Stirnwänden gebildete Teil 12b der Lagerzapfen 12 an.

Fig. 9 zeigt das Spannelement in der Position, die der Verriegelungsstellung entspricht. Wenn das Spannelement also in dieser Position in dem Topfgehäuse angeordnet ist, so liegt der in Fig. 9 rechte Exzenternocken 1 an der rechten Schulter 22 an. Dies bedeutet, daß der zylindrische Teil 12a des Lagerzapfens 12 an das linke Ende des Langlochs 4 gerückt ist. Wird nun das Spannelement 11 in Öffnungsstellung verschwenkt, d.h. im Uhrzeigersinn, so verschiebt der in Fig. 9 linke Exzenternocken 20, der an der linken Schulter 22 anliegt, den Lagerzapfen nach rechts, bis in der Öffnungsstellung der zylindrische Teil 12a am rechten Ende des Langlochs 4 anliegt. In dieser Stellung kann der Spannbolzen durch den Schlitz 9 des Topfgehäuses soweit eingeschoben werden, daß der Kopf an dem Ende der Spannfläche 17 vorbeigelangt. Wird nun durch Verschwenken im Gegenuhrzeigersinn der Beschlag verriegelt, so erfolgt eine Beaufschlagung der Unterseite des Kopfes des Spannbolzens durch die für sich genommen schon exzentrische Spannfläche 17, wobei gleichzeitig eine Verschiebung des zylindrischen Teils 12a der Lagerwelle 12 in die gleiche Richtung erfolgt, so daß sich die durch die beiden Exzentereinrichtungen bewirkten axialen Verschiebungen addieren. Es wird auf diese Weise eine trotz Verschwenkung um nur einen spitzen Winkel ausreichend starke axiale Bewegung der Angriffsfläche hergestellt. Damit kann auch bei ungünstigen Toleranzen eine ausreichend starke Verspannung hergestellt werden.

Zur spürbaren Verrastung des Spannelements 11 in Sperrstellung weist der Ansatz 16 an der Innenseite seines freien Endes eine Nase 23 auf, die hinter die Innenkante 24 eines Schlitzes 25 in dem Zapfen 7 eingreift und dort elastisch verriegelt wird. Die zum Überwinden der Innenkante 24 erforderliche Kraft spürt der Benutzer, der den Beschlag ja von Hand schließt, deutlich. Er hat also eine fühlbare Anzeige dafür, daß der Verschluß verriegelt ist.

Auf der dem Lagerzapfen 12 abgewandten Seite der Nase 23 enthält diese eine Kerbe 26, die in der Verriegelungsposition des Beschlags von der Außenseite her aufgrund einer Abflachung 27 des Flansches 5 am Ende der Durchbrechung 10 für die Klinge eines dort eingesetzten Schraubenziehers zugänglich ist. Zum Öffnen des Spannelements 11 aus der Verriegelungsposition ist also das Einsetzen eines Schraubenziehers erforderlich, der in der Kerbe 26 angreift und die Nase 23 über die Innenkante 24 des Schlitzes 25 hebt.

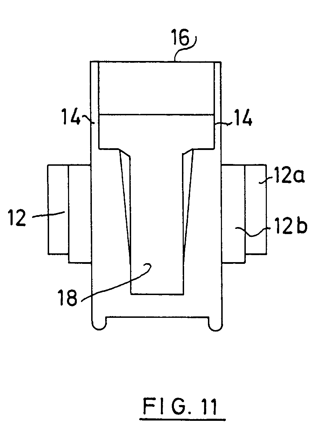

Fig. 11 zeigt eine Stirnansicht des Spannelements von rechts in Fig. 9 . Hier ist der Schlitz 18, dessen Breite etwa dem Durchmesser des Schaftes des Spannbolzens entspricht, zu sehen. Ebenfalls zu sehen ist die Aufteilung der Lagerzapfen in zwei Teile unterschiedlicher Form.

## Patentansprüche

1. Beschlag zur lösbaren Verbindung zweier Möbelteile (19, 20), wobei aus einer Fläche (22) des einen Möbelteils (20) ein Spannbolzen herausragt, mit
1.1 einem Topfgehäuse (1), das
1.1.1 in eine Topfbohrung des anderen Möbelteils (19) einsetzbar ist und 1.1.2 eine seitliche Öffnung (9) zur Aufnahme des Kopfes (25) des Spannbolzens (24) aufweist,
1.2 einem Spannelement (11), das
1.2.1 in dem Topfgehäuse (1) zwischen einer Sperrstellung und einer Freigabestellung verdrehbar gelagert ist,
1.2.2 eine exzentrisch zu seiner Drehachse angeordnete Spannfläche (17) aufweist,
1.2.2.1 die zum Angriff an der Unterseite des Kopfes (25) des Spannbolzens bestimmt ist, und
1.2.2.2 in der Freigabestellung das Einführen des Kopfes (25) des Spannbolzens (24) zuläßt,
1.2.3 sowie einen Ansatz (16) aufweist, der derart aus dem Topfgehäuse (1) herausragt, daß er ohne Werkzeug mindestens aus der Freigabestellung des Beschlages in die Sperrstellung überführt werden kann,
dadurch gekennzeichnet, daß das Spannelement (11) exzentrisch gelagert ist und die Exzentrizität der Lagerung des Spannelements (11) und die Exzentrizität der Spannfläche (17) derart aufeinander abgestimmt sind, daß sie sich addieren.

2. Beschlag nach Anspruch 1, bei dem der Ansatz (16) in Sperrstellung im wesentlichen in der Ebene der Oberfläche (22, 26) eines der beiden Möbelteile (19, 20) liegt.

3. Beschlag nach Anspruch 1 oder 2, bei dem der Ansatz (16) in Freigabestellung mit der Oberfläche (22, 26) beider Möbelteile einen Winkel einschließt.

4. Beschlag nach einem der vorhergehenden Ansprüche, bei dem der Ansatz (16) in Sperrstellung auf der Oberfläche (26) des Möbelteils (19) aufliegt, in dem das Topfgehäuse (1) eingesetzt ist.

5. Beschlag nach einem der vorhergehenden Ansprüche, bei dem die Drehachse des Spannelements (11) senkrecht zur Längsachse des Spannbolzens (24) verläuft.

6. Beschlag nach einem der vorhergehenden Ansprüche, bei dem die Drehachse des Spannelements (11) parallel zur Oberfläche (22, 26) beider Möbelteile (19, 20) verläuft.

7. Beschlag nach einem der vorhergehenden Ansprüche, bei dem das Topfgehäuse (1) einen auf der Oberfläche (26) des Möbelteils (19) aufliegenden Flansch (15) aufweist.

8. Beschlag nach Anspruch 7, bei dem an dem Flansch (5) ein parallel zum Topfgehäuse (1) verlaufender Zapfen (7) angebracht ist.

9. Beschlag nach Anspruch 7 oder 8, bei dem der Flansch (5) eine Durchbrechung (10) aufweist, in der der Ansatz (16) in Sperrstellung liegt.

10. Beschlag nach einem der vorhergehenden Ansprüche, bei dem die Spannfläche (17) an dem Kopf (25) des Spannbolzens (24) beidseits des Schafts (23) angreift.

11. Beschlag nach einem der vorhergehenden Ansprüche, bei dem die Spannfläche (17) einen Spannbereich, in dem sich der Abstand der Spannfläche (17) von der Drehachse des Spannelementes (11) verringert, und einen sich daran anschließenden Festlegbereich aufweist, in dem der Abstand gleich bleibt.

12. Beschlag nach einem der vorhergehenden Ansprüche, bei dem die Spannfläche (17) vor einem Spannbereich einen Einzugsbereich aufweist, in dem der Abstand der Spannfläche (17) von der Drehachse sich stärker verringert als im Spannbereich.

13. Beschlag nach einem der vorhergehenden Ansprüche, bei dem das Spannelement (11) als Spannhebel (27) ausgebildet ist.

14. Beschlag nach einem der vorhergehenden Ansprüche, bei dem das Spannelement (11) in Sperrstellung verrastbar festlegbar ist, wobei insbesondere die Verrastung zwischen dem Ansatz (16) des Spannelements (11) und dem Beschlag vorgesehen ist.

15. Beschlag nach einem der vorhergehenden Ansprüche, mit einem die Freigabestellung des Spannelements (11) begrenzenden Anschlag (19).

16. Beschlag nach einem der vorhergehenden Ansprüche, mit mindestens einem abgestuften Lagerzapfen (12), dessen äußerer Teil (12a) kreiszylindrische Form und dessen innerer Teil (12b) mindestens einen Exzenternocken (20, 21) aufweist, sowie ggf. mit einem zweiten Exzenterzapfen.

17. Beschlag nach Anspruch 15 oder 16, bei dem der äußere Teil (12a) des Lagerzapfens (12) in einem Langloch gelagert ist.

18. Beschlag nach einem der Ansprüche 15 bis 17, bei dem mindestens ein Exzenternocken (20, 21) mit einer Stirnfläche (Schulter 22) zusammenwirkt.

19. Beschlag nach einem der vorhergehenden Ansprüche, mit einer Einsetzmöglichkeit zum Einsetzen eines Werkzeugs zum Lösen des Beschlags aus der Sperrstellung.

20. Beschlag nach einem der vorhergehenden Ansprüche, bei dem der Kopf (25) des Spannbolzens (24) im Bereich seiner Unterseite etwa halbkugelförmig ausgebildet ist.

21. Beschlag nach einem der vorhergehenden Ansprüche, bei dem der Spannbolzen (24) unterhalb seines Kopfes (25) mit axialem Abstand von diesem einen umlaufenden Kragen (30) zur Anlage an der Oberfläche (22) des Möbelteils (20) aufweist.

## Claims

1. Fitting for the detachable connection of two furniture parts (19, 20), a clamping bolt projecting from one surface (22) of one furniture part (20) having
1.1 a cup-shaped casing (1), which
1.1.1 is insertable in a cup-shaped bore of the other furniture part (19) and
1.1.2 has a lateral opening (9) for receiving the head (25) of the clamping bolt (24),
1.2 a clamping element (11), which
1.2.1 is rotatably mounted in the cup-shaped casing (1) between a locked position and a release position,
1.2.2 has a clamping surface (17) arranged eccentrically to its rotation axis,
1.2.2.1 which is intended for engagement on the underside of the clamping bolt head (25) and
1.2.2.2 in the release position allows the insertion of the head (25) of the clamping bolt (24),
1.2.3 as well as a lug (16), which projects out of the cup-shaped casing (1) in such a way that without a tool it can at least be transferred from the fitting release position into the locked position,
characterized in that the clamping element (11) is eccentrically mounted and the eccentricity of the mounting of the clamping element (11) and the eccentricity of the clamping surface (17) are so matched to one another that they are summated.

2. Fitting according to claim 1, wherein, in the locked position, the lug (16) is essentially located in the plane of the surface (22, 26) of one of the two furniture parts (19, 20).

3. Fitting according to claim 1 or 2, wherein, in the release position, the lug (16) forms an angle with the surface (22, 26) of both furniture parts.

4. Fitting according to one of the preceding claims, wherein the lug (16), in the locked position, rests on the surface (26) of the furniture part (19) in which the cup-shaped casing (1) is inserted.

5. Fitting according to one of the preceding claims, wherein the rotation axis of the clamping element (11) is perpendicular to the longitudinal axis of the clamping bolt (24).

6. Fitting according to one of the preceding claims, wherein the rotation axis of the clamping element (11) is parallel to the surface (22, 26) of both furniture parts (19, 20).

7. Fitting according to one of the preceding claims, wherein the cup-shaped casing (1) has a flange (15) resting on the surface (26) of the furniture part (19).

8. Fitting according to claim 7, wherein a pin (7) parallel to the cup-shaped casing (1) is fitted to the flange (5).

9. Fitting according to claim 7 or 8, wherein the flange (5) has an opening (10) in which the lug (16) is located in the locked position.

10. Fitting according to one of the preceding claims, wherein the clamping surface (17) engages on the head (25) of the clamping bolt (24) on both sides of the shank (23).

11. Fitting according to one of the preceding claims, wherein the clamping surface (17) has a clamping area in which there is a decrease in the spacing between the clamping surface (17) and the rotation axis of the clamping element (11) and a fixing area connected thereto in which the spacing remains the same.

12. Fitting according to one of the preceding claims, wherein, upstream of a clamping area, the clamping surface (17) has a feed area, in which the spacing between the clamping surface (17) and the rotation axis decreases more than in the clamping area.

13. Fitting according to one of the preceding claims, wherein the clamping element (11) is constructed as a clamping lever (27).

14. Fitting according to one of the preceding claims, wherein the clamping element (11) is engageably fixable in the locked position and in particular the engagement is provided between the lug (16) of the clamping element (11) and the fitting.

15. Fitting according to one of the preceding claims having a stop member (19) limiting the release position of the clamping element (11).

16. Fitting according to one of the preceding claims having at least one stepped journal (12), whose outer part (12a) has a circular cylindrical shape and whose inner part (12b) has at least one eccentric cam (20, 21), as well as optionally with a second eccentric pin.

17. Fitting according to claim 15 or 16, wherein the outer part (12a) of the journal (12) is mounted in an oblong hole.

18. Fitting according to one of the claims 15 to 17, wherein at least one eccentric cam (20, 21) cooperates with a front face (shoulder 22).

19. Fitting according to one of the preceding claims with an insertion possibility for the insertion of a tool for releasing the fitting from the locked position.

20. Fitting according to one of the preceding claims, wherein the head (25) of the clamping bolt (24) is roughly hemispherical in the vicinity of its underside.

21. Fitting according to one of the preceding claims, wherein below its head (25) and axially spaced therefrom, the clamping bolt (24) has an all-round collar (30) for engaging on the surface (22) of the furniture part (20).

## Revendications

1. Ferrure pour le montage libérable de deux parties de meuble (19, 20), un boulon de serrage débordant d'une surface (22) d'une des parties de meuble (20), comportant:
1.1 un boîtier en pot (1),
1.1.1 qui peut être inséré dans un alésage en pot de l'autre partie de meuble (19), et
1.1.2 présente une ouverture latérale (9) pour réception de la tête (25) du boulon de serrage (24),
1.2 un élément de serrage (11),
1.2.1 qui est monté dans le boîtier en pot (1) de manière à pouvoir tourner entre une position de blocage et une position de libération,
1.2.2 qui présente une surface de serrage (17) disposée excentriquement par rapport à son axe de rotation,
1.2.2.1 destinée à l'accrochage du boulon de serrage par la face inférieure de la tête (25), et
1.2.2.2 permettant dans la position de libération l'enfoncement de la tête (25) du boulon de serrage (24),
1.2.3 et qui présente également un appendice (16) qui déborde hors du boitier en pot (1) de manière à pouvoir être transféré sans outil au moins de la position de libération de la ferrure jusque dans la position de blocage,
caractérisée en ce que l'élément de serrage (11) est monté excentriquement et en ce que l'excentricité du montage de l'élément de serrage (11) et l'excentricité de la surface de serrage (17) sont accordées l'une a l'autre de manière à s'additionner.

2. Ferrure selon la revendication 1, dans laquelle l'appendice (16) repose en position de blocage essentiellement dans le plan de la surface (22, 26) d'une des deux parties de meuble (19, 20).

3. Ferrure selon la revendication 1 ou 2, dans laquelle, en position de libération, l'appendice (16) forme un angle avec la surface (22, 26) des deux parties de meuble.

4. Ferrure selon l'une des revendications précédentes, dans laquelle, en position de blocage, l'appendice (16) repose sur la surface (26) de la partie de meuble (19) dans laquelle le boitier en pot (1) est inséré.

5. Ferrure selon l'une des revendications précédentes, dans laquelle l'axe de rotation de l'élément de serrage (11) s'étend perpendiculairement à l'axe longitudinal du boulon de serrage (24).

6. Ferrure selon l'une des revendications précédentes, dans laquelle l'axe de rotation de l'élément de serrage (11) s'étend parallèlement à la surface (22, 26) des deux parties de meuble (19, 20).

7. Ferrure selon l'une des revendications précédentes, dans laquelle le boitier en pot (1) présente une bride (15) reposant sur la surface (26) de la pièce de meuble (19).

8. Ferrure selon la revendication 7, dans laquelle un tourillon (7) s'étendant parallèlement au boîtier en pot (1) est installé sur la bride (5).

9. Ferrure selon la revendication 7 ou 8, dans laquelle la bride (5) présente une découpe (10) dans laquelle l'appendice (16) se place en position de blocage.

10. Ferrure selon l'une des revendications précédentes, dans laquelle la surface de serrage (17) s'engage sur la tête (25) du boulon de serrage (24) des deux côtés de la tige (23).

11. Ferrure selon l'une des revendications précédentes, dans laquelle la surface de serrage (17) présente une plage de serrage dans laquelle la distance entre la surface de serrage (17) et l'axe de rotation de l'élément de serrage (11) se réduit, et une plage d'immobilisation qui se raccorde à la première, dans laquelle la distance reste constante.

12. Ferrure selon l'une des revendications précédentes, dans laquelle la surface de serrage (17) présente en avant d'une plage de serrage une plage d'enfoncement dans laquelle la distance entre la surface de serrage (17) et l'axe de rotation se réduit plus fortement que dans la plage de serrage.

13. Ferrure selon l'une des revendications précédentes, dans laquelle l'élément de serrage (11) est configuré comme levier de serrage (27).

14. Ferrure selon l'une des revendications précédentes, dans laquelle l'élément de serrage (11) peut être immobilisé dans la position de blocage par encliquetage, tandis qu'en particulier l'encliquetage est prévu entre l'appendice (16) de l'élément de serrage (11) et la ferrure.

15. Ferrure selon l'une des revendications précédentes, comportant un arrêt (19) délimitant la position de libération de l'élément de serrage (11).

16. Ferrure selon l'une des revendications précédentes, comportant au moins un tourillon de montage (12) échelonné, dont la partie extérieure (12a) présente la forme d'un cylindre circulaire et dont la partie intérieure (12b) présente au moins une came excentrique (20, 21), et comportant éventuellement un second tourillon excentrique.

17. Ferrure selon la revendication 15 ou 16, dans laquelle la partie extérieure (12a) du tourillon de montage (12) est montée dans un trou oblong.

18. Ferrure selon l'une des revendications 15 à 17, dans laquelle au moins une came excentrique (20, 21) coopère avec une surface frontale (épaulement 22).

19. Ferrure selon l'une des revendications précédentes, avec une possibilité d'insertion, pour l'insertion d'un outil en vue de la libération de la ferrure hors de la position de blocage.

20. Ferrure selon l'une des revendications précédentes, dans laquelle la tête (25) du boulon de serrage (24) est configurée sensiblement en forme de demi-sphère dans la région de sa face inférieure.

21. Ferrure selon l'une des revendications précédentes, dans laquelle le boulon de serrage (24) présente en dessous de sa tête (25), à écartement axial de celle-ci, un collet périphérique (30) de pose sur la surface (22) de la partie de meuble (20).
